# EUROPEAN PATENT SPECIFICATION

(11) **EP 1 884 378 B1**
(45) Date of publication and mention of the grant of the patent: **12.08.2009**
(21) Application number: 07006033.0
(22) Date of filing: 23.03.2007
(51) Int. Cl.: B60D 1/52

(54) **Automatic vertically extractable tow hook**
Automatisch vertikal ausziehbarer Zughaken
Crochet de dépannage automatique verticalement extractible

(30) Priority: 01.08.2006 ES 200602120
(43) Date of publication of application: 06.02.2008
(73) Proprietor: Enganches Y Remolques Aragon S.L., 50057 Zaragoza (ES)
(72) Inventor: Legasa Perez, Federico, 50057 Zaragoza (ES); Benito Monreal, Fernando, 50057 Zaragoza (ES); Narbon Baselga, Antonio, 50057 Zaragoza (ES)
(74) Representative: Schäfer, Matthias W.

(56) References cited:
- EP-A- 0 160 934
- EP-A- 0 212 322
- DE-A1- 3 416 631
- DE-A1- 3 601 505

## Description

This present document relates, as its title suggests, to an automatic vertically extractable tow hook of the type used in motor cars or light industrial vehicles for hooking on to trailers, characterised in that it is formed by a vertically extractable ball with a tapered catch, provided with an anti-rotation mechanism, that is introduced into a support attached to the vehicle, being locked in place automatically by a locking roller that is inserted in a suitable housing in the conical catch driven by a pin and a spring released by a needle driven by the conical catch itself, it also having a release lever provided with a second safety closure mechanism with a key.

There are many and varied types of tow hooks that are widely known at this time, particularly for motor cars and other light vehicles. The most simple and widely used are fixed tow hooks, which, directly or indirectly by an adaptor chassis, are attached to the supporting structure of the motor car. The problem with these tow hooks is that, as they project permanently from the tow hook ball, they change the aesthetic appearance of the vehicle, reducing or eliminating the safety function of the rear bumper, and causing injury to the user, oil stains, and damage to other vehicles during parking manoeuvres.

To overcome these drawbacks, detachable tow hooks are widely known, in which the ball is only fitted when something needs to be towed, being removed for any other use, as a result of which the aforementioned problems are avoided. Many of these types of detachable tow hooks use manual mechanical fastenings by means of pins, bolts or rods to link the ball to the supporting structure of the vehicle. We can find examples of these types of tow hooks in Utility Model 9400991 "Extractable tow hook ball for vehicles" or in Patent 91107148 "Detachable tow hook", although the problem with this type of simple device is that the connection between the fixed part and the detachable part always has a certain amount of play that results from the fact that the tow hook is prone to tilt from side to side and rotate, and from mechanical wear that is accelerated by treatment, as well as causing a certain insecurity in the connection.

Other types of hooks, such as the one described in Patent 9200569 "Extractable tow hook support for motor cars and vans" attempt to improve the connection between elements by using a bayonet-type hook with a triangular housing, but still have the drawback of insufficient fastening precision and play that increases over time, not to mention the fact that they do not have locks or safety mechanisms. Utility Model 286624 "Extractable tow hook" describes a bayonet-type tow hook with a rectangular housing with the drawback of play in the connection and insufficient stability achieved in the ball.

Other devices are known such as the one disclosed in Patent 95202457 "Detachable tow hook device and procedure for its manufacture", which uses a dual-pin bayonet-type tow hook inserted manually not automatically, and which has the problem of a housing with a square cross-section prone to tilt from side to side and to create play, in addition to the fact that the housing of the ball remains permanently visible on the vehicle even after removing the ball.

Some tow hooks, such as the one described in Utility Model 9200393 "Improved detachable tow hook device" attempt to address this situation by means of a cylindrical locking pin that is housable manually, not automatically, and which is locked in place by a manual shaft, the drawback being that is not concealed from the user and that it only has one safety mechanism.

There are also tow hooks that cause the embedding of the ball automatically, such as the ones claimed in Utility Model 9103763 "Tow hook device for trailers and similar attachments", and in the Patent Application EP 0 212 322 A. The first one, which uses an automatic locking wedge with a spring, presents the problems of being visible on the car, not being disposed with safety mechanisms and still being prone to tilt from side to side and rotate.

The second one discloses a tow hook according to the preamble of claim 1, with a removable vehicle trailer coupling for passenger vehicles having a mounting device with a receiving component for the releasable reception of the shank of a ball rod provided with a coupling ball and presents a recess of the shank forming a hook-shaped head which can be locked in an engaging manner and automatically by means of spring loading in an adjustable manner in the operating position by means of a rotatably mounted swivel claw and a displaceable clamping wedge. This second vehicle trailer coupling presents the drawback that only a small mechanical surface of the shank's hook-shaped head is pressed against the corresponding rotatably mounted swivel claw, thus creating play, and that no anti-theft mechanism is involved.

Finally there are tow hooks such as that described in Patent 98107007 "Vehicle towing device with a tow hook with a detachable but automatically lockable ball, provided with a power point" based on a fitting groove with an automatic locking shaft, although there is still the problem of them being prone to wear due to tilting from side to side caused in the main by the small mechanical area of contact between the fixed part and the moving part.

It is an object of the present invention to overcome the drawbacks of the prior art and to devise a tow hook with reduced production costs. This object is solved by an automatic vertically extractable tow hook having the features of claim 1. Advantageous embodiments of the invention are described in the dependant claims.

The automatic vertically extractable tow hook is essentially made up of two main components: a vertically extractable ball and a support attached to the vehicle, both connected to each other by an automatic tapered catch provided with an anti-rotation mechanism. The ball is fixed into place by inserting the tapered catch into a housing with a similar shape and size in the interior of the support and accessible by its bottom part, being locked in place automatically by a locking roller that is inserted in a suitable housing in the conical catch driven by a pin and a spring released by a needle driven by the conical catch itself, it also having a release lever provided with a second safety closure mechanism with a key to prevent it from being detached.

The unit is detached by opening the safety lock with the key so that the lever can then be moved downwards, overcoming the force of the internal spring, thereby forcing the pin to move down, thus causing the release of the locking roller and therefore enabling the extraction of the ball. When the tapered element is removed from its housing the needle returns to its original position in the interior of the housing, driven by its spring, locking at its bottom the boss and the detachment lever, and leaving the support ready for the ball to be introduced again.

The automatic vertically extractable tow hook presented herein provides numerous advantages over the systems currently available, the most important of them enabling a perfect fit between the ball and the support, without any play that might cause looseness, thanks to the self-centring tapered element that creates a perfect housing with soft guidance, with barely any effort, in the support.

Another important advantage is that the support between the ball and the support itself is produced throughout the tapered element, without any play, thereby creating a greater area of contact between the ball and the support, and providing a more solid and stronger connection.

Another important advantage is that the locking mechanisms are fully incorporated into the support, remaining concealed from the user when the ball is detached.

As a result of the support remaining concealed, the bumpers are able to perform their safety function and, as the ball has been removed from the rear of the vehicle, they prevent injury to the user, oil stains, and damage to other vehicles during parking manoeuvres.

We should not forget that the configuration of this tow hook enables an automated mechanisation manufacturing process and that there is no need for welding, which means that the material does not suffer, thereby creating greater durability and strength and also permitting the strictest manufacturing tolerances.

As a result of its easy manufacture, and due to the mechanised manufacture without welding and with very little labour, production costs are significantly reduced.

The undoubted advantage that the significantly reduced weight of the tow hook represents for the fitter and the user should be pointed out.

Furthermore, it should be noted that its enclosed and precise structure does not require subsequent maintenance, and does not even need lubrication, thereby making it cleaner and easier to use.

The considerable advantage of the greatly increased safety provided by the two built-in safety systems should also be pointed out, firstly by the closure mechanism itself and secondly by the key-operated pin, which also acts as an efficient anti-theft system.

Finally, we must also highlight the fact that all the parts operate without causing wear to the materials or significant friction, looseness or play, thus reducing wear and increasing the operational life of the tow hook.

In order to better understand the object of the present invention, a preferential practical embodiment of the automatic vertically extractable tow hook has been represented in the plan attached.

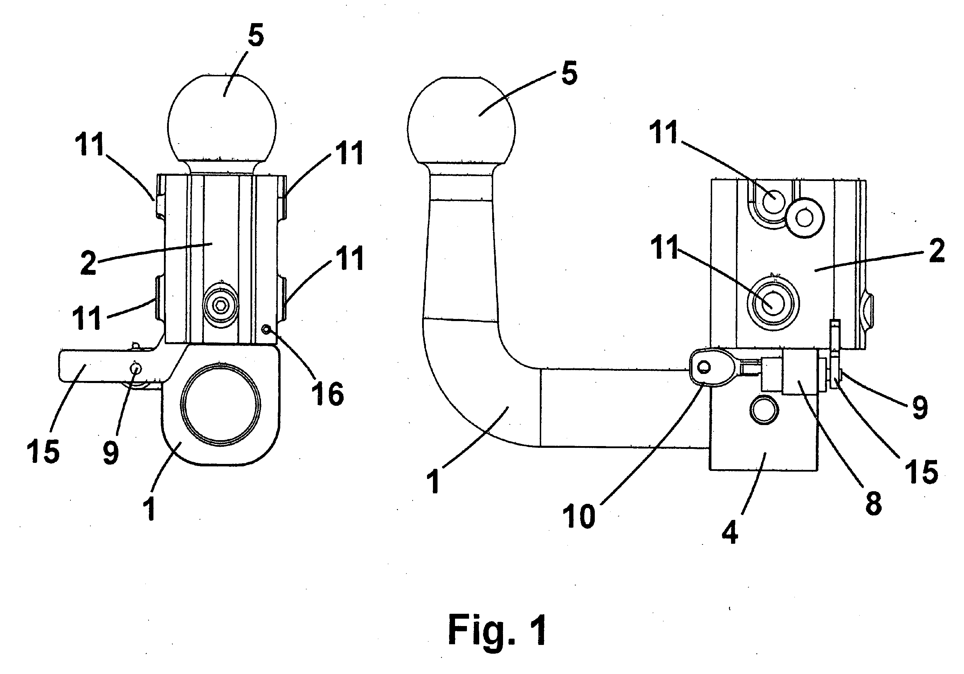

In said plan figure 1 shows profile views and a rear elevation of the assembled tow hook, with the ball inserted in the support and the safety mechanism locked in place by the key.

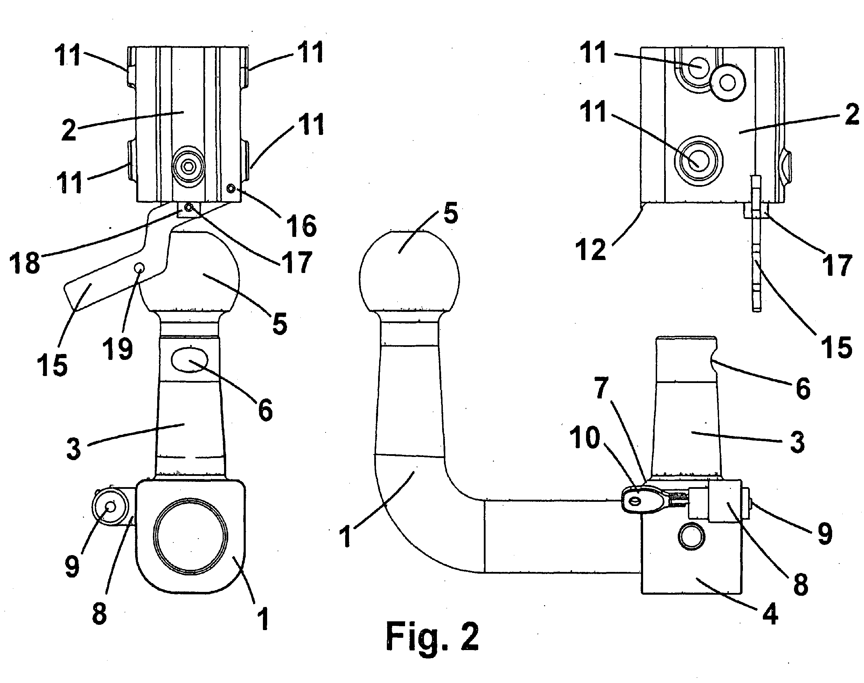

Figure 2 shows profile and rear elevation views of the detached tow hook, with the ball extracted from the support.

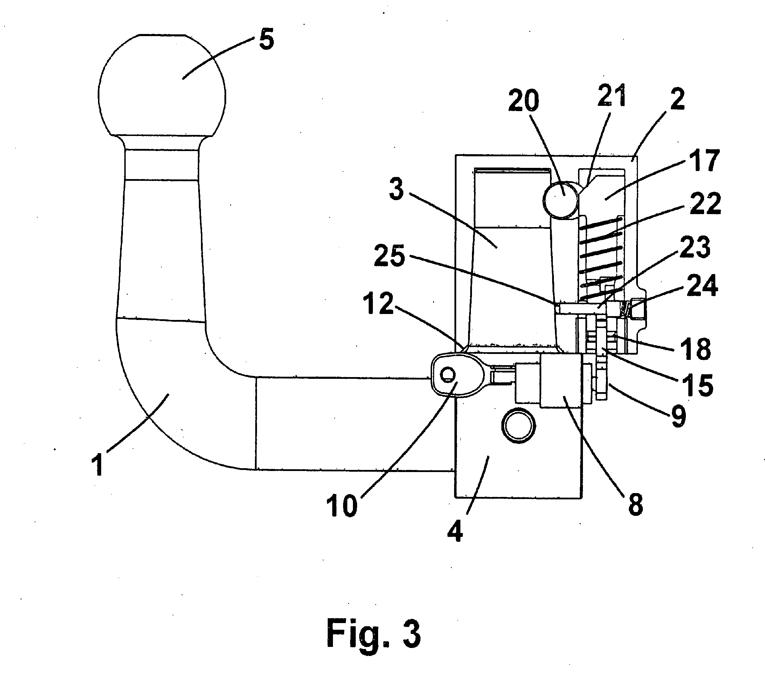

Figure 3 shows an internal profile view of the assembled tow hook, with the ball inserted in the support, detailing the position of the closure mechanism elements in the closure position.

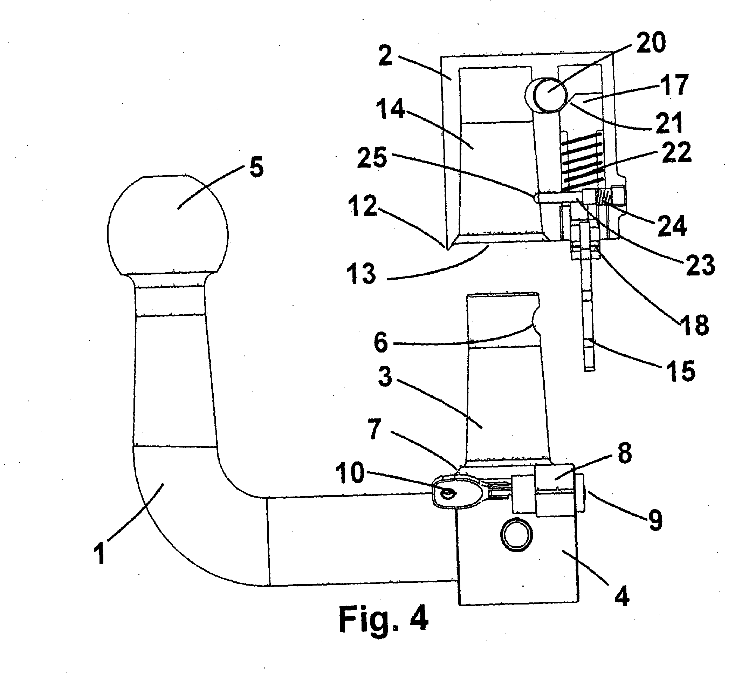

Figure 4 shows an internal profile view of the assembled tow hook, with the ball extracted from the support, detailing the position of the closure mechanism elements in the open position.

The automatic vertically extractable tow hook that is the object of this invention is basically made up of, as can be seen in the plan attached, by two main elements: a vertically extractable ball (1) and a support (2) attached to the vehicle, both connected to each other by an automatic tapered catch (3).

The vertically extractable ball (1) is made up of a central block (4) with a preferably square cross-section, although with rounded bottom edges, from which emerges horizontally a cylindrical section that, after a right-angled section, has a cross-section the diameter of which gradually reduces to end in a final spherical part (5) with the top end crowned by a straight surface, and used to hook the head to the trailer. Out of the aforementioned central block (4) emerges in a vertical direction the male part of the tapered catch (3) and which takes the shape of a tapered element ending in a cylindrical part provided with a partially cylindrical lateral recess (6). At the top front part of the central block (1) and adjacent to the base of the tapered catch (3) can be found a marked longitudinal bevel (7) in the place corresponding to one of the edges, and which forms part of the tow hook's anti-rotation device. On one of the sides of the central block (4) can also be found horizontally disposed an additional safety and anti-theft mechanism (8) consisting of a horizontally moveable pin (9) operated by a key (10).

The support (2) adopts the form of a block with a preferably quadrangular cross-section with the vertical edges preferably rounded and which is attached to the vehicle by a plurality of lateral threaded housings (11) designed to house the requisite assembly screws. At the bottom front part, in the place corresponding to the bottom front edge, projects a protuberance (12) with a triangular cross-section and which covers the aforementioned bottom front part of the support. This protuberance (12) is the other part of the anti-rotation device of the tow hook and possesses the corresponding size and proportions for fitting perfectly into the previously described longitudinal bevel (7) on the central part (4) of the ball (1), thereby preventing any type of rotation of the ball (1) on the horizontal plane in relation to the axis defined by the tapered catch (3), once inserted into the support (2). The bottom part of the support (2) is disposed with the opening (13) to a tapered housing (14) with the requisite dimensions to house in its male interior the tapered catch (3) so that the internal walls of the housing (14) are in close and complete contact with the internal walls of the male interior of the tapered catch (3) when the ball (1) is inserted into the support (2).

At the bottom part of the support (2) has also been disposed the tow hook detachment lever (15). This lever has an axis of rotation (16) on one end, driving a vertically disposed boss (17) by means of another intermediate axis of rotation (18) and disposed with a through perforation (19) designed to house the horizontally moveable pin (9) operated by a key (10) disposed on the ball (1) as an additional safety and anti-theft mechanism (8), thereby locking the lever in the assembly position (lever up) and preventing it from being operated until it is released.

The locking mechanism of the ball (1) is disposed in its entirety internally in the support (2), and is therefore always fixed to the vehicle. This mechanism consists of a locking cylinder (20), designed to be partially housed in the lateral recess (6) in the male part of the tapered catch (3) to prevent it from descending once it has been introduced, which is driven towards said lateral recess (6) by the top part of the boss (17) when it rises, which is disposed with a bevel (21) on its top part to cause this movement in a gentle manner. The boss (17) is driven upwards by a spring (22) after being released from its previous position by a horizontal needle (23), kept in its housing thanks to a spring (24) and which has been displaced as a result of its tip (25) being pushed by the conical catch (3) itself on being introduced in the housing (14) in which the tip (25) of the needle (23) projects out of, it also featuring also a release lever provided with a second key-operated safety closure mechanism that prevents its detachment. When the boss (17) rises it pulls the lever (15) to its closure position (top position) thanks to the axis (18). When the boss (17) reaches its upper stopper, its cylindrical wall prevents the horizontal displacement of the locking cylinder (20), which is firmly housed in the lateral recess (6) in the male part of the tapered catch (3). The additional safety and anti-theft mechanism (8) must then be activated to ensure the complete safety and locking of the tow hook.

The unit is detached by opening the safety and anti-theft lock (8) with the key (10) so that the lever (15) can then be moved downwards, overcoming the force of the internal spring (22), thereby forcing the pin (17) to move down, thus causing the release of the locking roller (20) and therefore enabling the extraction of the ball (1). When the tapered element (3) is removed from its housing (14) the needle (23) returns to its original position, with the head (25) projecting slightly in the interior of the housing (14), driven by its spring (24), locking at its bottom the boss (17) and the detachment lever (15), and leaving the support (2) ready for the ball (1) to be inserted again.

Having described the nature of the present invention in sufficient detail, in addition to a means for putting it into practice, all that remains to be added is that its description is not restrictive, and that variations both in materials and forms and sizes can be made.

## Claims

1. Automatic vertically extractable tow hook of the type used in motor cars or light industrial vehicles for hooking on to trailers, formed by a vertically extractable ball (1) and a support (2) attached to the vehicle, both connected together by an automatic tapered catch (3), **characterised in that** the vertically extractable ball (1) is made up of a central block (4) with a preferably square cross-section, although with rounded bottom edges, from which emerges horizontally a cylindrical section that, after a right-angled section, has a cross-section the diameter of which gradually reduces to end in a final spherical part (5) with the top end crowned by a straight surface, and used to hook the head to the trailer, emerging vertically out of the aforementioned central block (4) the male part of the tapered catch (3) and which takes the shape of a tapered element ending in a cylindrical part provided with a partially cylindrical lateral recess (6).

2. Automatic vertically extractable tow hook according to the preceding claim wherein the ball (1) is disposed at the top front part of the central block (4) and adjacent to the base of the tapered catch (3), the central block having a marked longitudinal bevel (7) in the place corresponding to one of the edges, which forms part of the tow hook's anti-rotation device, also being found horizontally disposed on one of the sides of the central block (4) an additional safety and anti-theft mechanism (8) consisting of a horizontally moveable pin (9) operated by a key (10).

3. Automatic vertically extractable tow hook according to the preceding claims wherein the support (2) adopts the form of a block with a preferably quadrangular cross-section with the vertical edges preferably rounded and which is attached to the vehicle by a plurality of lateral threaded housings (11) designed to house the requisite assembly screws, projecting at the bottom front part, in the place corresponding to the bottom front edge, a protuberance (12) with a triangular cross-section and which covers the aforementioned bottom front part of the support, and which is the other constituent part of the anti-rotation device of the tow hook and possesses the corresponding size and proportions for fitting perfectly into the previously described longitudinal bevel (7) on the central block (4) of the ball (1), thereby preventing any type of rotation of the ball (1) on the horizontal plane in relation to the axis defined by the tapered catch (3), once inserted into the support (2).

4. Automatic vertically extractable tow hook according to the preceding claims wherein the bottom part of the support (2) is disposed with the opening (13) to a tapered housing (14) with the requisite dimensions to house in ist female interior the tapered catch (3) so that the internal walls of the housing (14) are in close and complete contact with the walls of the male tapered catch (3) when the ball (1) is inserted into the support (2).

5. Automatic vertically extractable tow hook according to the preceding claims wherein the tow hook detachment lever (15) has also been disposed at the bottom part of the support (2), being disposed with an axis of rotation (16) on one end, driving a vertically disposed boss (17) by means of another intermediate axis of rotation (18) and also being disposed with a through perforation (19) designed to house the horizontally moveable pin (9) operated by a key (10) disposed on the ball (1) as an additional safety and anti-theft mechanism (8), thereby locking the lever in the assembly position and preventing it from being operated until it is released.

6. Automatic vertically extractable tow hook according to the preceding claims wherein the locking mechanism of the ball (1) is disposed in its entirety internally in the support (2), and is therefore always fixed to the vehicle, this mechanism consisting of a locking cylinder (20), designed to be partially housed in the lateral recess (6) in the male part of the tapered catch (3) to prevent it from descending once it has been introduced, which is driven towards said lateral recess (6) by the top part of the boss (17) when it rises, which is disposed with a bevel (21) on its top part to cause this movement in a gentle manner, the boss (17) being driven upwards by a spring (22) after being released from its previous position by a horizontal needle (23), kept in its housing thanks to a spring (24) and which has been displaced as a result of its tip (25) being pushed by the conical catch (3) itself on being introduced in the housing (14) in which the tip (25) of the needle (23) projects out of, the boss (17), when it rises, pulling the lever (15) to its assembly position thanks to the axis (18), its cylindrical wall preventing, when the boss (17) reaches its upper stopper, the horizontal displacement of the locking cylinder (20), which is firmly housed in the lateral recess (6) in the male part of the tapered catch (3), the additional safety and anti-theft device (8) then being activated.

7. Automatic vertically extractable tow hook according to the preceding claims wherein the tow hook is such that the detachment of the unit involves opening the safety and anti-theft lock (8) with the key (10) so that the lever (15) can then be moved downwards, overcoming the force of the internal spring (22), thereby forcing the boss (17) to move down, thus causing the release of the locking cylinder (20) and therefore enabling the extraction of the ball (1), so that then, when the tapered element (3) is removed from its housing (14) the needle (23) returns to its original position, with the head (25) projecting slightly in the interior of the housing (14), driven by its spring (24), locking at its bottom the boss (17) and the detachment lever (15), and leaving the support (2) ready for the ball (1) to be introduced again.

## Patentansprüche

1. Automatischer vertikal ausfahrbarer Kopplungshaken, wie er in Kraftfahrzeugen oder leichten Gewerbefahrzeugen zum Ankoppeln von Anhängern zum Einsatz kommt, gebildet durch einen vertikal ausfahrbaren Kugelkopf (1) und eine an dem Fahrzeug befestigte Halterung (2), wobei beide miteinander mittels einer automatischen, sich verjüngenden Arretierung (3) verbunden sind, **dadurch gekennzeichnet, dass** der vertikal ausfahrbare Kugelkopf (1) aus einem Zentralenblock (4) mit einem bevorzugt quadratischen Querschnitt, jedoch mit abgerundeten Unterkanten, besteht, von welchem sich in horizontaler Richtung ein zylindrischer Abschnitt erstreckt, welcher nach einem rechtwinkligem Abschnitt einen Querschnitt mit einem Durchmesser aufweist, der sich allmählich verringert, um in einem abschließenden kugelförmigen Teil (5) zu enden, dessen oberes Ende von einer ebenen Fläche begrenzt wird, und wobei der Kupplungshaken dazu verwendet wird, den Kopf an den Anhänger anzukoppeln, wobei sich aus dem zuvor genannten Zentralenblock (4) in vertikaler Richtung der männliche Teil der sich verjüngenden Arretierung (3) herausfährt, wobei letztere die Form eines sich verjüngenden Elements hat, das in einem zylindrischen Teil endet, welches teilweise einen zylindrischen seitlichen Einschnitt (6) aufweist.

2. Automatischer vertikal ausfahrbarer Kopplungshaken nach dem vorhergehenden Anspruch, wobei der Kugelkopf (1) am vorderen oberen Ende des Zentralenblockes (4) und gegenüber der Basis der sich verjüngenden Arretierung (3) angeordnet ist, und wobei der Zentralenblock eine ausgeprägte, in Längsrichtung verlaufende Abschrägung (7) mit einer Lage aufweist, die einer der Kanten entspricht, und wobei die Abschrägung einen Teil der Anti-Rotier-Einrichtung des Kopplungshakens bildet, und wobei außerdem horizontal an einer der Seiten des Zentralenblockes (4) ein zusätzlicher Sicherheits- und Diebstahlschutz-Mechanismus (8) angeordnet ist, der aus einem horizontal bewegbaren Stift (9) besteht, welcher durch einen Schlüssel (10) betätigbar ist.

3. Automatischer vertikal ausfahrbarer Kopplungshaken nach den vorhergehenden Ansprüchen, wobei die Halterung (2) an die Form eines Blocks mit einem bevorzugt quadratischen Querschnitt angepasst ist, dessen vertikale Kanten bevorzugt abgerundet sind, und der am Fahrzeug mittels einer Mehrzahl von Schraubenaufnahmen (11) angebracht wird, die derart gestaltet sind, dass sie die erforderlichen Montageschrauben aufnehmen, und wobei dieser an seinem unteren vorderen Teil, an der Stelle, welche mit der unteren Vorderkante korrespondiert, eine Auswölbung (12) mit einem dreieckigen Querschnitt aufweist, die den zuvor genannten unteren vorderen Teil der Arretierung verdeckt, und die der andere Bestandteil der Anti-Rotier-Einrichtung des Kopplungshakens ist, und die die entsprechende Größe und Proportionen aufweist, um genau auf die zuvor beschriebene, in Längsrichtung verlaufende Abschrägung (7) am Zentralenblock (4) des Kugelkopfes (1) zu passen, so dass jedwede Art von Rotation des Kugelkopfes (1) in der Horizontalebene relativ zu der Achse, die durch die sich verjüngende Arretierung (3) definiert ist, unterbunden wird, sobald sie in die Halterung (2) eingeführt ist.

4. Automatischer vertikal ausfahrbarer Kopplungshaken nach den vorhergehenden Ansprüchen, wobei sich der untere Teil der Halterung (2) mit der Öffnung (13) an ein sich verjüngendes Gehäuse (14) anschließt, das Abmessungen aufweist, die erforderlich sind, um in seinem weiblichen Innenraum die sich verjüngende Arretierung (3) aufzunehmen, so dass die Innenwände des Gehäuses (14) in engem und vollständigem Kontakt mit den Wänden der männlichen Arretierung (3) sind, wenn der Kugelkopf (1) in die Halterung (2) eingeführt ist.

5. Automatischer vertikal ausfahrbarer Kopplungshaken nach den vorhergehenden Ansprüchen, wobei der Lösehebel (15) des Kopplungshakens ebenfalls am unteren Teil der Halterung (2) angeordnet ist und eine Rotationsachse (16) an einem Ende aufweist, so dass ein vertikal angeordneter Bolzen (17) über eine weitere Zwischen-Rotationsachse (18) antreibbar ist, und der ferner mit einer Durchgangsbohrung (19) versehen ist, die derart ausgestaltet ist, dass sie den horizontal bewegbaren Stift (9) aufnimmt, welcher mittels eines Schlüssels (10) betätigbar ist, so dass der Bolzen am Kugelkopf (1) als ein zusätzlicher Sicherheits-und Diebstahlschutz-Mechanismus (8) angeordnet ist, indem der Hebel in Zusammenbau-Position gesperrt und vor einer Betätigung bis zum Lösen geschützt wird.

6. Automatischer vertikal ausfahrbarer Kopplungshaken nach den vorhergehenden Ansprüchen, wobei der Verschlussmechanismus des Kugelkopfes (1) vollständig im Inneren der Halterung (2) untergebracht ist und dementsprechend jederzeit am Fahrzeug fixiert ist, wobei dieser Mechanismus aus einem Schließzylinder (20) besteht, der derart ausgestaltet ist, dass er teilweise von einem seitlichen Einschnitt (6) im männlichen Teil der sich verjüngenden Arretierung (3) aufnehmbar ist, um diese an einem Abgleiten zu hindern, nachdem sie eingeführt wurde, wobei der Schließzylinder dazu vom oberen Teil des Bolzens (17), wenn sich dieser aufwärts bewegt, seitlich in Richtung des besagten seitlichen Einschnitts (6) bewegt, und wobei der Bolzen eine Abschrägung (21) an seinem oberen Teil aufweist, um diese Bewegung sanft ausführen zu können, wobei der Bolzen (17) mittels einer Feder (22) aufwärts bewegt wird, nachdem er mittels einer horizontalen Nadel (23) aus seiner vorherigen Position gelöst worden ist, die in ihrem Gehäuse mittels einer Feder (24) gehalten wird, und die **dadurch** verschoben wurde, dass ihre Spitze (25) durch die konische Arretierung (3) selber gedrückt wurde, während dieselbe in das Gehäuse (14) eingeführt wird, in welches die Spitze (25) der Nadel (23) hineinragt, so dass der Bolzen (17), wenn er sich aufwärts bewegt, den Hebel (15) aufgrund der Achse (18) in dessen Löse-Position zieht, wobei, wenn der Bolzen (17) seinen oberen Anschlag erreicht, seine zylindrische Wand eine horizontale Verschiebung des Schließzylinders (20) verhindert, der fest in dem seitlichen Einschnitt (6) des männlichen Teils der sich verjüngenden Arretierung (3) aufgenommen wird, so dass somit der zusätzliche Sicherheits- und Diebsstahlschutz-Mechanismus (8) aktiviert ist.

7. Automatischer vertikal ausfahrbarer Kopplungshaken nach den vorhergehenden Ansprüchen, wobei der Kopplungshaken derart ausgestaltet ist, dass das Lösen der Vorrichtung ein Öffnen des Sicherheits- und Diebsstahlschutz-Mechanismus (8) mit dem Schlüssel (10) umfasst, so dass der Hebel (15) dann abwärts bewegbar ist, indem die Kraft der Innen liegenden Feder (22) überwunden wird, so dass der Bolzen (17) in eine Abwärtsbewegung gezwungen wird, woraus die Freigabe des Schließzylinders (20) resultiert, so dass ein Herausziehen des Kugelkopfes (1) ermöglicht wird, so dass dann, wenn das sich verjüngende Element (3) aus seinem Gehäuse (14) entfernt wird, die Nadel (23) in ihre ursprüngliche Position zurückkehrt, in welcher der Kopf (25), angetrieben durch seine Feder (24), geringfügig in das Innere des Gehäuses (14) hineinragt, und an seinem Boden den Bolzen (17) und den Lösehebel (15) blockiert, so dass die Halterung (2) bereit für ein Wiedereinführen des Kugelkopfes (1) ist.

## Revendications

1. Un dispositif d'attelage de remorque automatique extractible verticalement, du type de ceux utilisés sur les voitures ou les véhicules industriels légers, pour attacher des remorques, composé par une balle extractible verticalement (1) et un support (2) attaché au véhicule, les deux éléments étant reliés par un arrêtoir conique automatique (3), **caractérisé en ce que** la balle extractible verticalement (1) se compose d'un bloc central (4) avec une section transversale de préférence carrée, mais présentant des bords inférieurs arrondis, duquel s'élève horizontalement une section cylindrique qui, après une section à angle droit, présente une section transversale dont le diamètre se réduit progressivement pour terminer en une partie finale sphérique (5) et dont l'extrémité supérieure est dotée d'une surface droite, et utilisée pour fixer la tête à la remorque et duquel s'élève verticalement la partie mâle de l'arrêtoir conique (3) qui prend la forme d'un élément conique se terminant en une partie cylindrique présentant un renfoncement latéral partiellement cylindrique (6).

2. Un dispositif d'attelage de remorque automatique extractible verticalement, conformément à la revendication précédente, où la balle (1) est placée sur la partie frontale supérieure du bloc central (4) de manière adjacente à la base de l'arrêtoir conique (3), le bloc central présentant un biseau longitudinal marqué (7) à l'endroit correspondant à l'un des bords faisant partie du dispositif anti-rotation du dispositif d'attelage de remorque et où un mécanisme additionnel de sécurité et antivol (8) comprenant une goupille déplaçable verticalement (9) opérée par une clé (10) est placé horizontalement sur l'un des côtés du bloc central (4).

3. Un dispositif d'attelage de remorque automatique extractible verticalement, conformément aux revendications précédentes, où le support (2) prend la forme d'un bloc présentant de préférence une section transversale quadrangulaire avec des bords verticaux de préférence arrondis et qui est attaché au véhicule par une multitude de logements filetés (11) conçus pour contenir les vis d'assemblage requises, projetant sur la partie frontale inférieure, à l'endroit correspondant au bord frontal inférieur, une protubérance (12) présentant une section transversale triangulaire qui couvre la partie frontale inférieure précitée du support et qui est l'autre partie constitutive du dispositif anti-rotation du dispositif d'attelage de remorque et possède la dimension et les proportions correspondantes pour s'intégrer parfaitement dans le biseau (7) longitudinal précité (7) sur le bloc central (4) de la balle (1), empêchant ainsi tout type de rotation de la balle (1) sur le plan horizontal par rapport à l'axe défini par le l'arrêtoir conique (3), une fois inséré dans le support (2).

4. Un dispositif d'attelage de remorque automatique extractible verticalement, conformément aux revendications précédentes, où la partie inférieure du support (2) est disposée avec l'ouverture (13) d'un logement conique (14) présentant les dimensions requises pour contenir, dans son intérieur femelle, l'arrêtoir conique (3) de manière que les parois internes du logement (14) sont en contact étroit et complet avec les parois de l'arrêtoir conique (3) mâle lorsque la balle (1) est insérée dans le support (2).

5. Un dispositif d'attelage de remorque automatique extractible verticalement, conformément aux revendications précédentes, où le levier de détachement (15) du dispositif d'attelage de remorque a également été placé sur la partie inférieure du support (2) et été équipé d'un axe de rotation (16) sur une des extrémités, entraînant un pêne (17) placé verticalement à l'aide d'un autre axe de rotation intermédiaire (18) et également doté d'une perforation de part en part (19) conçue pour contenir la goupille (9) déplaçable verticalement opérée par une clé (10) disposée sur la balle (1) pour servir de mécanisme de sécurité et antivol (8) supplémentaire qui verrouille le levier en position d'assemblage et l'empêche d'être opéré jusqu'à ce qu'il soit libéré.

6. Un dispositif d'attelage de remorque extractible verticalement, conformément aux revendications précédentes, où le mécanisme de verrouillage de la balle (1) est disposé entièrement à l'intérieur du support (2) et est donc toujours fixé au véhicule, ce mécanisme comprenant un cylindre de verrouillage (20) conçu pour être partiellement contenu dans le renfoncement latéral (6) dans la partie mâle de l'arrêtoir conique (3) pour l'empêcher de descendre une fois qu'il a été mis en place, et qu'est poussé vers le renfoncement latéral (6) par la partie supérieure du pêne (17) lorsqu'il monte, celui-ci comportant un biseau (7) sur sa partie supérieure pour causer ce mouvement de manière douce, le pêne (17) étant poussé vers le haut par un ressort (22) après avoir été libéré de sa position précédente par une aiguille horizontale (23), gardé dans son logement grâce à un ressort (24) et déplacée lorsque sa pointe (25) est poussée par l'arrêtoir conique (3) lorsque ce dernier est introduit dans le logement (14) dans lequel dépasse la pointe (25) de l'aiguille (23) et où le pêne (17), lorsqu'il monte, tire le levier (15) vers sa position d'assemblage grâce à l'axe (18), ses parois cylindriques empêchant que lorsque le pêne atteint son butoir supérieur, le cylindre de verrouillage (20) se déplace horizontalement, ce dernier étant fermement logé dans le renfoncement latéral (6) dans la partie mâle de l'arrêtoir conique (3), activant ainsi le mécanisme additionnel de sécurité et antivol (8).

7. Un dispositif d'attelage de remorque automatique extractible verticalement, conformément aux revendications précédentes, tel que le détachement de l'unité entraîne l'ouverture du mécanisme de sécurité et antivol (8) avec la clé (10) de manière que le levier (15) puisse être déplacé vers le bas, dépassant la force du ressort interne (22), forçant ainsi le pêne (17) à descendre et causant ainsi la libération du cylindre de verrouillage (20) et permettant ainsi l'extraction de la balle (1) de manière que lorsque l'élément conique (3) est retiré de son logement (14), l'aiguille (23) se remette dans sa position initiale, avec la tête (25) projetée légèrement à l'intérieur du logement (14) poussée par son ressort (24), verrouillant ainsi à sa base le pêne (17) et le levier de détachement (15), et laissant le support (2) prêt à recevoir à nouveau la balle (1).
